# EUROPEAN PATENT APPLICATION

(11) **EP 1 517 456 A1**
(43) Date of publication of application: **23.03.2005**
(21) Application number: 02741276.6
(22) Date of filing: 25.06.2002
(51) Int. Cl.: H04B 7/26

(54) **POWER CONTROL METHOD AND DEVICE**

(71) Applicant: FUJITSU LIMITED, Kawasaki-shi, Kanagawa 211-8588 (JP)
(72) Inventor: YAMANO, Osamu, FJ Mobile Core Technologies Co.,Ltd, Kawasaki-shi, Kanagawa 211-8588 (JP)
(74) Representative: HOFFMANN - EITLE
(86) International application number: PCT/JP2002/006314
(87) International publication number: WO 2004/002018

(57) **Abstract**

An open-loop power controller of a transmission power control apparatus investigates whether a dedicated control channel DCCH and a synchronization channel SCH overlap. If the channels overlap, the open-loop power controller suspends ordinary open-loop power control processing, increases a target SIR by a satisfactory level and indicates this to a closed-loop power controller. The closed-loop power controller maintains the indicated target SIR and executes closed-loop transmission power control processing based upon the target SIR. The open-loop power controller resumes ordinary open-loop transmission power control processing after DCCH reception ends.

## Description

### Technical Field

This invention relates to a power control method and apparatus in a W-CDMA scheme. More particularly, the invention relates to a power control method and apparatus that take the positional relationship between a downlink dedicated control channel and synchronization channel into consideration to change target quality for generating downlink transmission power control (TPC) bits.

### Background Art

In CDMA mobile communications, multiple channels are distinguished from one another by spreading codes that are assigned to the channels, whereby a plurality of channels perform communication sharing a single frequency band. In an actual mobile communications environment, however, a receive signal is susceptible to interference from its own channel and from other channels owing to delayed waves ascribable to multipath fading and radio waves from other cells, and this interference has an adverse influence upon channel separation. Further, the amount of interference sustained by a receive signal varies with time owing to momentary fluctuations in reception power ascribable to multipath fading and changes in the number of users communicating simultaneously. In an environment in which a receive signal is susceptible to noise that varies with time in this fashion, it is difficult for the quality of a receive signal in a mobile station linked to a base station to be maintained at a desired quality in a stable manner.

In order to follow up such a change in number of interfering users and a momentary fluctuation caused by multipath fading, closed-loop transmission power control is carried out for exercising control in such a manner that signal-to-interference ratio power (SIR) is measured on the receiving side and the measured value is compared with a target SIR, whereby SIR on the receiving side will approach the target SIR.

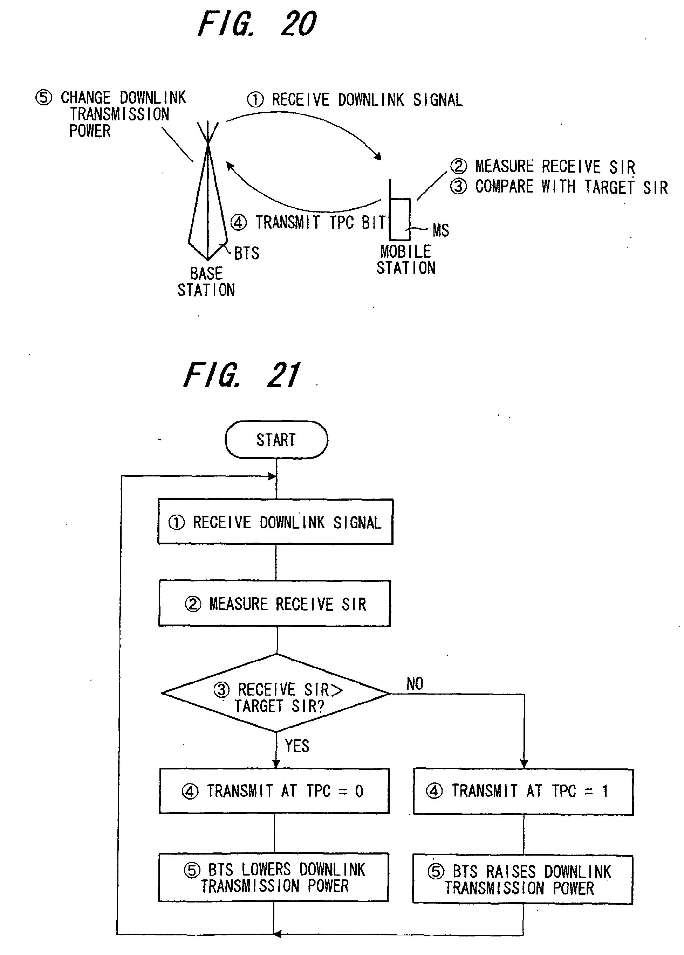

Fig. 20 is a diagram for describing closed-loop transmission power control, and Fig. 21 is a flowchart of closed-loop transmission power control.

A mobile station MS ① receives a downlink signal from a base station BTS, ② measures the SIR (receive SIR) of a dedicated physical channel (DPCH) during reception, and ③ compares the receive SIR with target SIR set by a host. ④ The mobile station MS implements TPC (Transmission Power Control) bit = 0 to direct the base station BTS to lower transmission power if the receive SIR is better than the target SIR, and implements TPC bit = 1 to direct the base station BTS to raise the transmission power if the receive SIR is inferior to the target SIR. ⑤ The base station BTS controls the downlink transmission power based upon the "0", "1" logic of the TPC bits received. Since the mobile station MS performs the above-described power control slot by slot, downlink transmission power can be controlled at high speed.

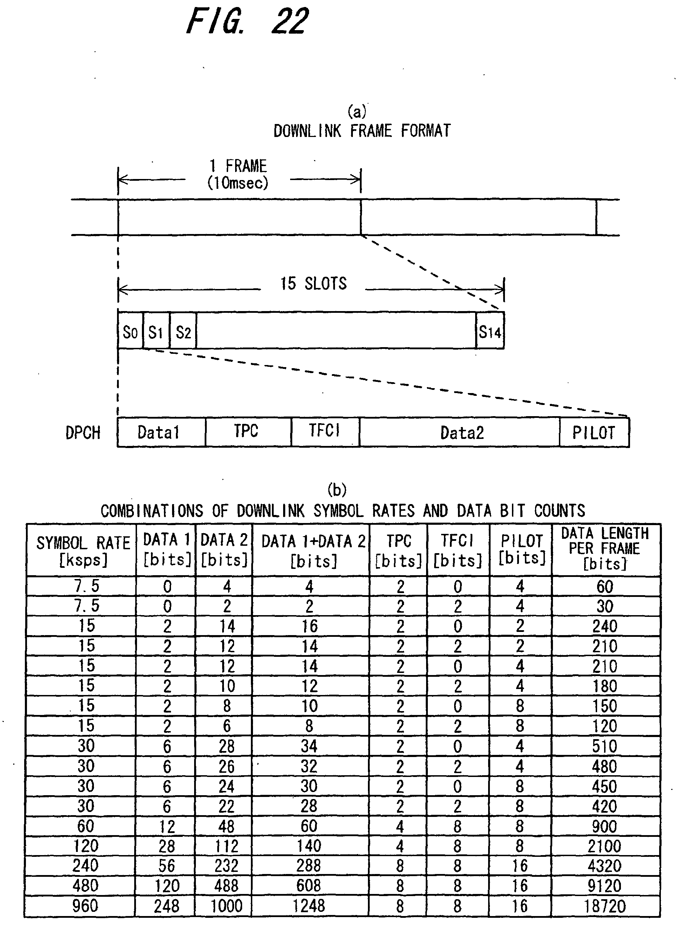

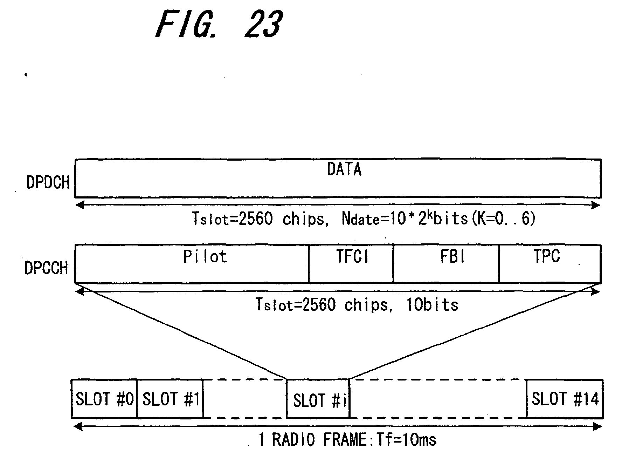

Fig. 22 is a diagram showing the frame structure of a dedicated physical channel DPCH in a downlink as standardized by the 3^{rd} Generation Partnership Project (referred to as "3GPP" below), and Fig. 23 is a diagram showing the frame structure of a dedicated physical channel DPCH in an uplink.

As shown at (a) in Fig. 22, the downlink DPCH frame is such that one frame has a duration of 10 ms and is composed of 15 slots S₀ to S₁₄. A DPDCH (Dedicated Physical Data Channel) for transmitting a first data section Data1 and a second data section Data2 and a DPCCH (Dedicated Physical Control Channel) for transmitting a PILOT, TPC and TFCI are time-division multiplexed slot by slot.

As shown at (b) in Fig. 22, the numbers of bits of PILOT, TPC and TFCI vary in dependence upon the symbol rate, and the numbers of bits vary as necessary even when the symbol rates are the same. In which slot format a transmission is performed is specified by the host prior to communication.

The dedicated physical data channel DPDCH has ① a dedicated traffic channel DTCH and ② a dedicated control channel DCCH. The dedicated traffic channel DTCH is a channel that transmits dedicated traffic information between the mobile station and network, and the dedicated control channel DCCH is a channel used in the transmission of dedicated control information between the mobile station and network. A number of messages make up the dedicated control information, such as:
① a message indicating a procedure for setting up / releasing the signal link between the mobile station and base station and all wireless bearers;
② a higher layer message in the uplink and downlink directions;
③ a message used in set-up /release of a new wireless bearer or establish a transport channel;
④ a message used when a transport parameter is changed; and
⑤ a message used in set-up / release of a physical channel.

As shown in Fig. 23, the uplink DPCH frame is composed of a dedicated physical data channel DPDCH that transmits only transmit data and a dedicated physical control channel DPCCH that transmits control data such as Pilot, TPC, TFCI and FBI (Feedback Indicator), etc. After the data on the channels DPDCH, DPCCH is spread by orthogonal code, the data is mapped onto a real axis (I axis) and imaginary axis (Q axis) and multiplexed. One frame of the uplink has a duration of 10 ms and is composed of 15 slots (slot #0 to slot #14). The number of bits per slot of the dedicated physical data channel DPDCH varies in dependence upon the symbol rate, but each slot of the dedicated physical control channel DPCCH is fixed at ten bits and the symbol rate is fixed at 15 ksps.

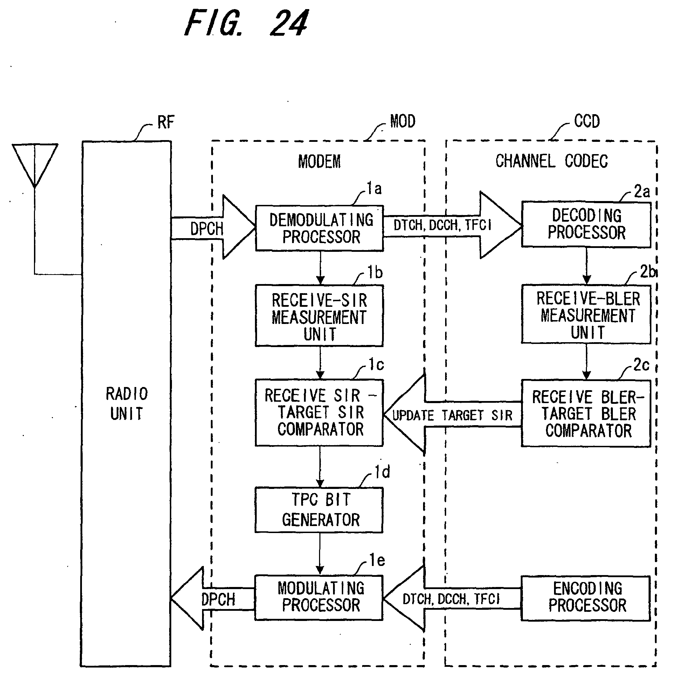

The above-described closed-loop transmission power control is carried out in a modem MOD of the mobile station MS. Fig. 24 is a block diagram of the main components of the mobile station MS. A demodulating processor 1a in the modem MOD applies orthogonal detection and despread processing to a receive signal that enters from a radio unit RF, thereby demodulating the receiving signal. A receive-SIR measurement unit 1b measures the signal vs. interference noise ratio SIR, and a comparator 1c compares target SIR with the receive SIR and inputs the result of comparison to a TPC bit generator 1d. The TPC bit generator 1d executes TPC bit = 0 if the receive SIR is greater than the target SIR and executes bit = 1 if the receive SIR is less than the target SIR. The target SIR, which is a SIR value necessary in order to obtain an error rate of, e.g., 10⁻³ (occurrence of error at a rate of once per 1000 times), is set in the comparator 1c from a channel codec CCD. A modulating processor 1e spread-spectrum modulates the dedicated physical data DPDCH (DTCH, DCCH) and the dedicated physical control data DPCCH (TFCI, TPC, Pilot, FBI) and applies a DA conversion and quadrature modulation after the spread-spectrum modulation. The radio unit RF applies processing such as a frequency conversion and power amplification and then transmits the resultant signal to the base station from an antenna. A base station BTS demodulates the TPC bits and control downlink transmission power in accordance with the "0", "1" logic of the TPC bits.

Owing to changes in traveling velocity during communication and changes in the propagation environment ascribable to travel, the SIR that is necessary to obtain a desired quality (the block error rate, or BLER) is not constant. In order to deal with these changes, block error is observed and control is exercised to increase the target SIR if the observed value is inferior to the target BLER and decrease the target SIR if the observed value is superior to the target BLER. Control that thus changes the target SIR adaptively in order to achieve the desired quality is well known as open-loop transmission power control.

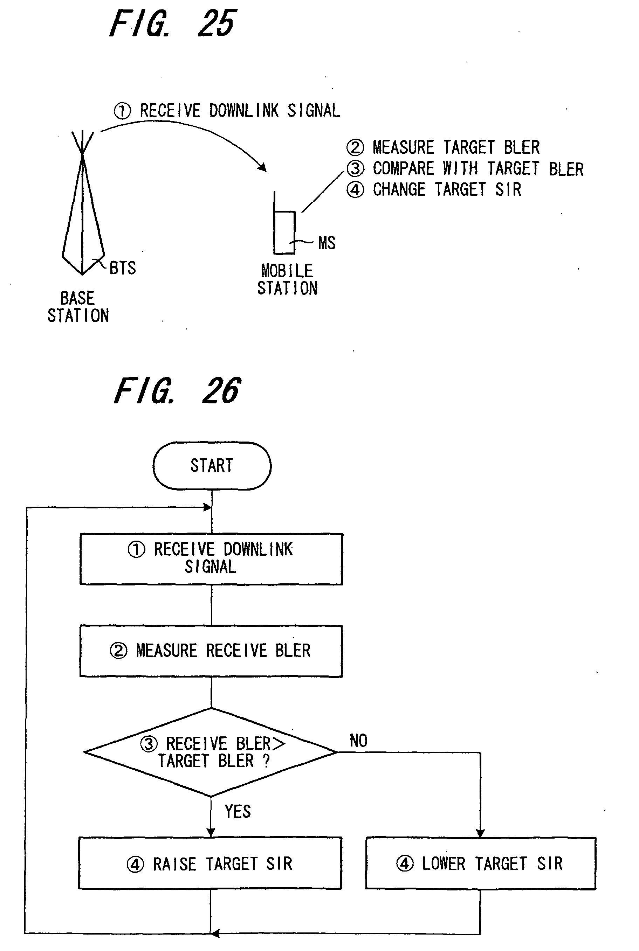

Fig. 25 is a diagram for describing open-loop transmission power control, and Fig. 26 is a flowchart of open-loop transmission power control.

The mobile station MS ① receives a downlink signal from the base station BTS, ② measures the block error rate BLER (receive BLER) of a dedicated physical channel during reception, and ③ compares the receive BLER with a target BLER, which corresponds to the communication service reported from the host. ④ If the receive BLER is superior to the target BLER, the mobile station instructs the modem MOD to lower the target SIR. If the receive BLER is inferior to the target BLER, then the mobile station instructs the modem MOD to raise the target SIR. The mobile station MS performs the above-describe open-loop control frame by frame.

Open-loop power control processing is executed by the channel codec CCD (Fig. 24). That is, after the signal that has been transmitted from the base station BTS is demodulated by the demodulating processor 1a of the modem MOD, the signal is subjected to error correcting decoding by a decoding processor 2a and thenceforth is segmented into transport blocks TrBk. CRC error detection is subsequently carried out on a per-TrBk basis. A receive-BLER measurement unit 2b measures the receive BLER based upon the result of error detection of each transport block TrBk and inputs the receive BLER to a comparator 2c. The latter compares the receive BLER and the target BLER in terms of size, instructs the modem MOD to raise the target SIR if the receive BLER is larger than the target BLER and to lower the target SIR if the receive BLER is smaller than the target BLER.

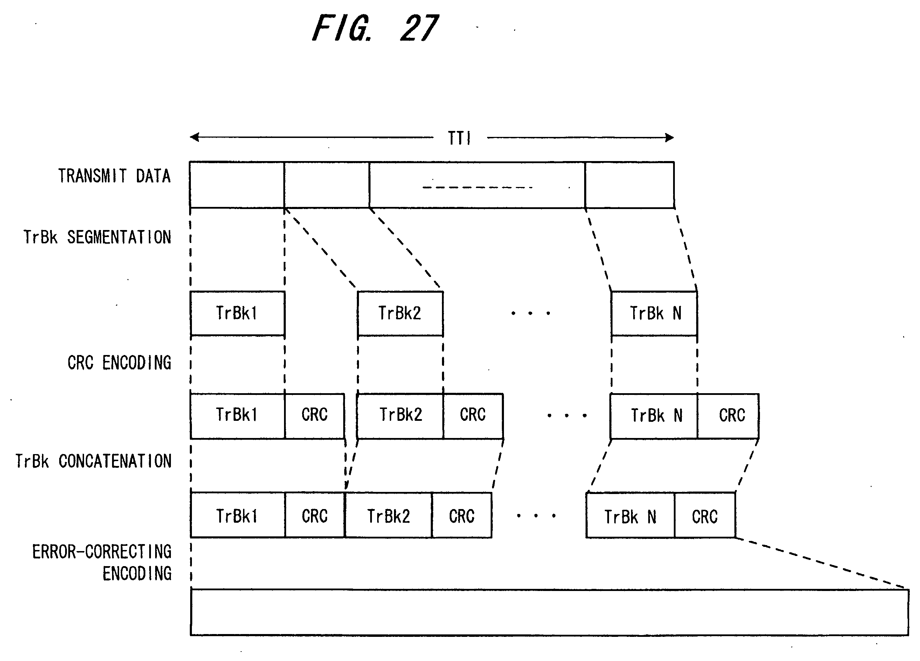

In W-CDMA as currently standardized, encoding is performed on the transmitting side in the manner shown in Fig. 27. Specifically, if a plurality (N) of transport blocks TrBk exist in a transmission time interval (TTI), a CRC add-on circuit generates a CRC (Cyclic Redundancy Code) error-detecting code for every transport block TrBk and adds this onto the transmit data. An encoder concatenates joins the N-number of transport blocks TrBk having the attached CRCs and encodes the blocks by error-correcting encoding such as convolutional coding or turbo coding. On the receiving side the decoding processor 2a subjects the receive data to error-correction decoding processing. Next, CRC error detection is performed for every transport block TrBk of N transport blocks constituting the result of decoding and the result of error detection is input to the receive-BLER measurement unit 2b.

In open-loop power control processing, the mobile station MS decides the target SIR mainly by the block error rate BLER of the dedicated traffic channel DTCH. Consequently, in a case where silence continues in a voice call, etc., there are occasions where the block error rate BLER of the dedicated traffic channel DTCH appears good and the target SIR continues to be lowered. If the dedicated control channel DCCH is introduced into the dedicated physical channel DPCH under these conditions, transmission power will be too low, quality sufficient to receive the dedicated control channel DCCH cannot be obtained and communication may be cut off. This tendency becomes particularly pronounced if interfering waves are present. Accordingly, it is necessary to control the target SIR so as to maintain enough quality to receive the dedicated control channel DCCH.

Further, with a W-CDMA scheme, ordinarily there is no interference between different channels because spreading is carried out using channelization codes that are mutually orthogonal. With regard to a synchronization channel, however, channelization codes are not used. Consequently, when viewed from another channel, a synchronization channel SCH appears to be an interference wave at a portion at which the synchronization channel SCH is superimposed. In particular, at a portion where the timings of the dedicated control channel DCCH in the dedicated physical channel DPCH and of the synchronization channel SCH overlap, a problem which arises is that the reception quality of the dedicated control channel DCCH is degraded by interference of the synchronization channel SCH, the dedicated control data cannot be decoded correctly and communication is severed.

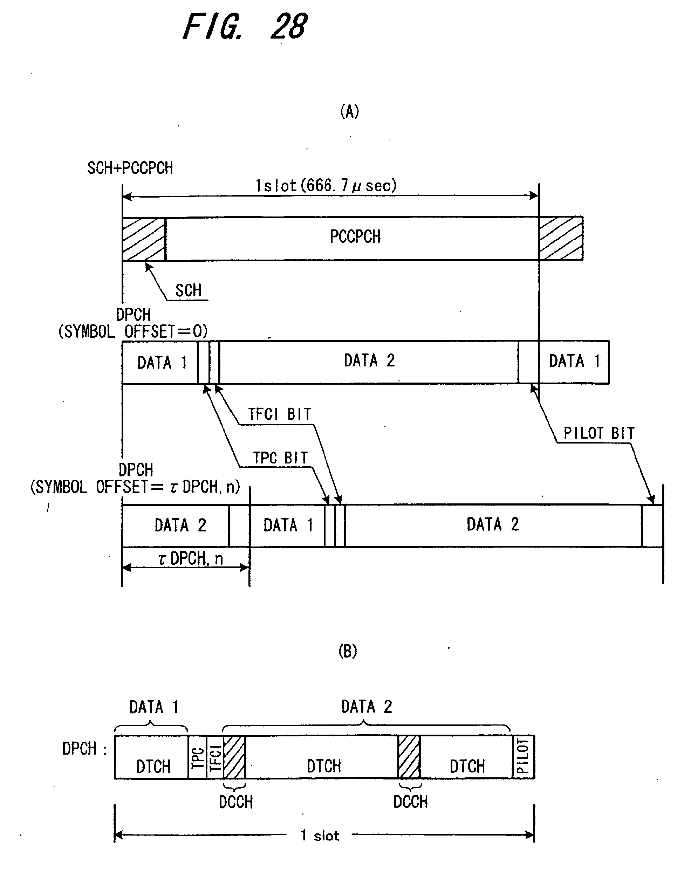

In Fig. 28, (A) is a diagram useful in describing the positional relationship between the synchronization channel SCH and dedicated physical channel DPCH. In the Figure, SCH is a synchronization channel for cell search, and PCCPCH is a primary common control physical channel. In a W-CDMA scheme, when a radio link is connected between the base station BTS and mobile station MS, the mobile station MS performs a cell search using the synchronization channel SCH transmitted by the base station BTS. More specifically, the mobile station MS establishes spreading code synchronization on the downlink using the synchronization channel SCH, then decodes the reported channel information of the primary common control physical channel PCCPCH on the downlink and transmits a random-access channel RACH on the uplink at a transmission timing stipulated in advance. The base station BTS establishes spreading code synchronization on the uplink an decodes the RACH information. As a result, the uplink and downlink radio links are established.

The period of SCH + PCCPCH is one slot interval (= 666.7 µs), which is the same as that of the dedicated physical channel DPCH. SCH + PCCPCH, DPCH are each transmitted from the base station BTS. The relationship between SCH + PCCPCH and the dedicated physical channel DPCH in cases where symbol offset = 0 and symbol offset = τDPCH, n hold is illustrated at (A) of Fig. 28.

As shown at (B) in Fig. 28, the dedicated physical data channel DPDCH (the Data1, Data2 sections) of the dedicated physical channel DPCH has a dedicated traffic channel DTCH that transmits dedicated traffic information such as voice, and a dedicated control channel DCCH used in transmission of dedicated control information between the mobile station and network. In a case where the synchronization channel SCH overlaps the dedicated traffic channel DTCH, voice quality merely deteriorates and this does not result in a fatal flaw. However, if the synchronization channel SCH overlaps the dedicated control channel DCCH, the reception quality of the dedicated control information declines and there are instances where the dedicated control information can no longer be decoded correctly. This can result in a fatal situation in which communication is severed.

Accordingly, an object of the present invention is to so arrange it that communication will not be severed even in a case where the positions of the dedicated control channel DCCH and synchronization channel SCH overlap.

Another object of the present invention is to suppress a decline in reception quality of the dedicated control channel DCCH, which is ascribable to interference with the synchronization channel, while an improvement in reception quality that is more than necessary is suppressed.

### Disclosure of the Invention

In a transmission power control apparatus according to the present invention, an open-loop power controller investigates whether a dedicated control channel DCCH and a synchronization channel SCH overlap based upon information reported from a higher layer and a receive TFCI. If the channels overlap, the open-loop power controller suspends ordinary open-loop power control processing, increases a target SIR by a satisfactory level and indicates this to a closed-loop power controller. The closed-loop power controller maintains the indicated target SIR until the end of DCCH reception and executes closed-loop transmission power control processing based upon the target SIR. The open-loop power controller resumes ordinary open-loop transmission power control processing after DCCH reception ends.

Further, the open-loop power controller is also capable of exercising control as follows if it is determined that the dedicated control channel DCCH and synchronization channel SCH overlap: If the dedicated control channel DCCH and synchronization channel SCH overlap, the open-loop power controller suspends ordinary open-loop power control processing, increases the target SIR a fixed level at a time frame by frame during DCCH reception and indicates this to the closed-loop power controller. The open-loop power controller resumes ordinary open-loop transmission power control processing after DCCH reception ends.

Thus, if the dedicated control channel DCCH and synchronization channel SCH overlap, the target SIR can be set higher than usual. In closed-loop power control processing, therefore, receive SIR becomes inferior to the target SIR. As a result, the base station is notified so as to raise the transmission power. If the base station raises the downlink transmission power, the DCCH reception quality is improved and communication will not be cut off. Further, target SIR is raised only if the dedicated control channel DCCH and synchronization channel SCH overlap. As a result, a decline in reception quality of the dedicated control channel DCCH, which is ascribable to interference with the synchronization channel, can be suppressed while an improvement in reception quality that is more than necessary is suppressed.

### Brief Description of the Drawings

Fig. 1 is a diagram useful in describing the protocol architecture of a radio interface in a W-CDMA system;
Fig. 2 is a block diagram of a mobile station;
Fig. 3 is a diagram useful in describing transport format TF, a TFCI table and TFCI;
Fig. 4 is an example of TrCH multiplex processing;
Fig. 5 is a flowchart of channel coding and multiplex processing of downlink dedicated channel (DCH) of a base station;
Fig. 6 is an example of DTCH/DCCH radio frame segmentation;
Fig. 7 is an example of DTCH/DCCH TrCH multiplexing;
Fig. 8 is a diagram useful in describing DTCH/DCCH second interleaving and physical channel mapping;
Fig. 9 is a diagram illustrating the positional relationship between the dedicated physical channel DPCH and synchronization channel SCH;
Fig. 10 is a diagram useful in describing a DTCH/DCCH positional relationship that conforms to the number of TrBLKs of the dedicated traffic channel DTCH;
Fig. 11 is a table (TFCI table) indicating the relationship between TFCI and number of TrBLKs of DTCH/DCCH;
Fig. 12 is a diagram useful in describing an example of a change in TFCI;
Fig. 13 is a diagram useful in describing TrCH multiplexing;
Fig. 14 is a block diagram of a mobile station MS having a closed-loop power controller and an open-loop power controller according to the present invention;
Fig. 15 is a flowchart of first open-loop control processing according to the present invention;
Fig. 16 is a flowchart of second open-loop control processing according to the present invention;
Fig. 17 is a diagram useful in describing second open-loop control processing;
Fig. 18 is a flowchart of third open-loop control processing according to the present invention;
Fig. 19 is a diagram useful in describing third open-loop control processing;
Fig. 20 is a diagram useful in describing closed-loop transmission power control;
Fig. 21 is a flowchart of closed-loop transmission power control;
Fig. 22 illustrates the slot format of a downlink DPCH;
Fig. 23 is a diagram showing the frame structure of an uplink DPCH;
Fig. 24 is a block diagram of the main components of a mobile station MS;
Fig. 25 is a diagram useful in describing open-loop transmission power control;
Fig. 26 is a flowchart of open-loop transmission power control;
Fig. 27 is a diagram useful in describing processing for error detection encoding and processing for error correction encoding; and
Fig. 28 is a diagram useful in describing the positional relationship between the synchronization channel SCH and dedicated physical channel DPCH.

### Best Mode for Carrying Out the Invention

### (A) Radio interface in W-CDMA system

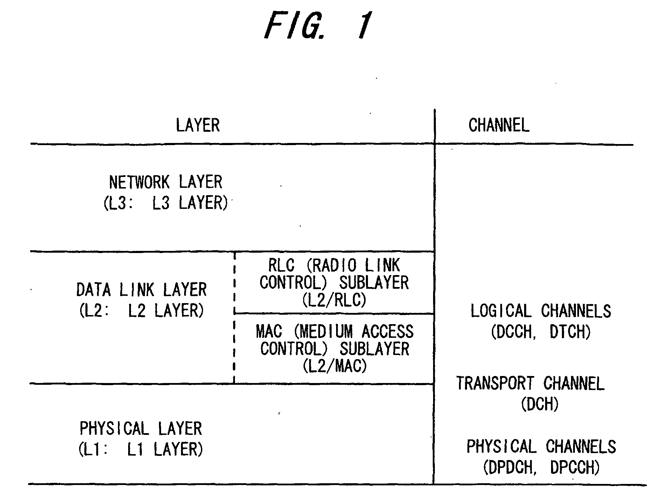

Fig. 1 is a diagram useful in describing the protocol architecture of a radio interface in a W-CDMA system. The architecture includes three protocol layers, namely a physical layer (Layer 1), a data link layer (Layer 2) and a network layer (Layer 3). Layer 2 is further divided into a MAC (Medium Access Control) sublayer and RLC (Radio Link Control) sublayer.

The channels of this radio interface are arranged in three hierarchical levels, namely physical channels, a transport channel and logical channels. These are classified according to the function and logical characteristics of the transmitted signal and are characterized by the information content transferred. The logical channels related to this invention are the dedicated control channel DCCH and the dedicated traffic channel DTCH. The transport channel is a channel provided to the MAC sublayer from the physical layer. There are transport channels of a plurality of types in order to transmit data of different characteristics and forms on the physical layer. The transport channel related to this invention is a dedicated channel DCH. The dedicated channel DCH is a bidirectional channel used in transmission of user data and is assigned individually to each mobile station. The physical channels are classified taking the function of the physical layer into consideration and are specified by spreading codes and frequency carriers, etc. The physical channels related to this invention are the dedicated physical channels (DPDCH, DPCCH) and the synchronization channel SCH for cell search.

The mapping of the logical channels (DTCH, DCCH) to the transport channel is carried out in the MAC sublayer, and the mapping of the transport channel to the physical channel is carried out in the physical layer.

### (B) General operation of mobile station

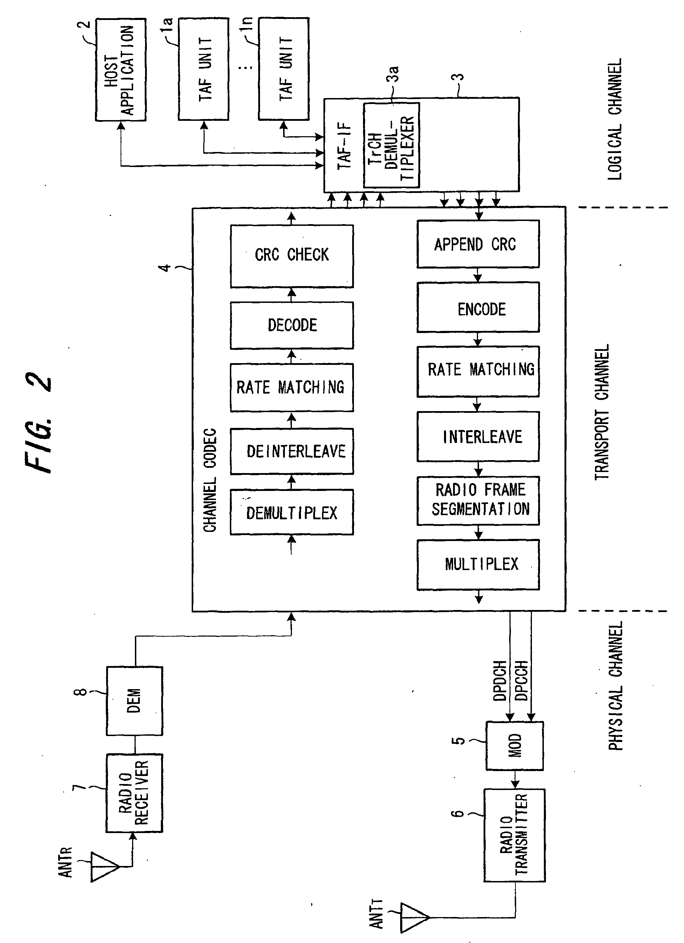

Fig. 2 is a block diagram of a mobile station. Dedicated traffic information (DTCH information) and dedicated control information (DCCH information) that has been mapped to a prescribed logical channel and transmitted from a plurality of terminal access function units (abbreviated to "TAF units" below) 1a to In and a host application 2 is compiled in a terminal access function interface (TAF IF) 3 that separates and combines data. Information necessary for encoding processing and multiplex transmission, such as ① the connection relationship between the logical channel and transport channel (TrCH), ② the encoding scheme of each transport channel TrCH, ③ the TTI (Transmission Time Interval) of each transport channel TrCH and ④ the TF (Transport Format) of each TrCH, has been specified in the TAF IF 3 from a higher layer. Furthermore, the transmission time intervals TTI stipulated in W-CDMA are 10 ms, 20 ms, 40 ms and 80 ms.

A TrCH demultiplexer 3a in the TAF IF 3 ① refers to the information specified by the higher layer and verifies the TrCH on which each logical channel is connected, ② decides the transmit data length per TTI of each TrCH based upon the transmit bit rate of each logical channel and transport format TF of each TrCh, and ③ demultiplexes the transmit data of each TrCH on a per-TTI basis and inputs the data to a channel codec 4.

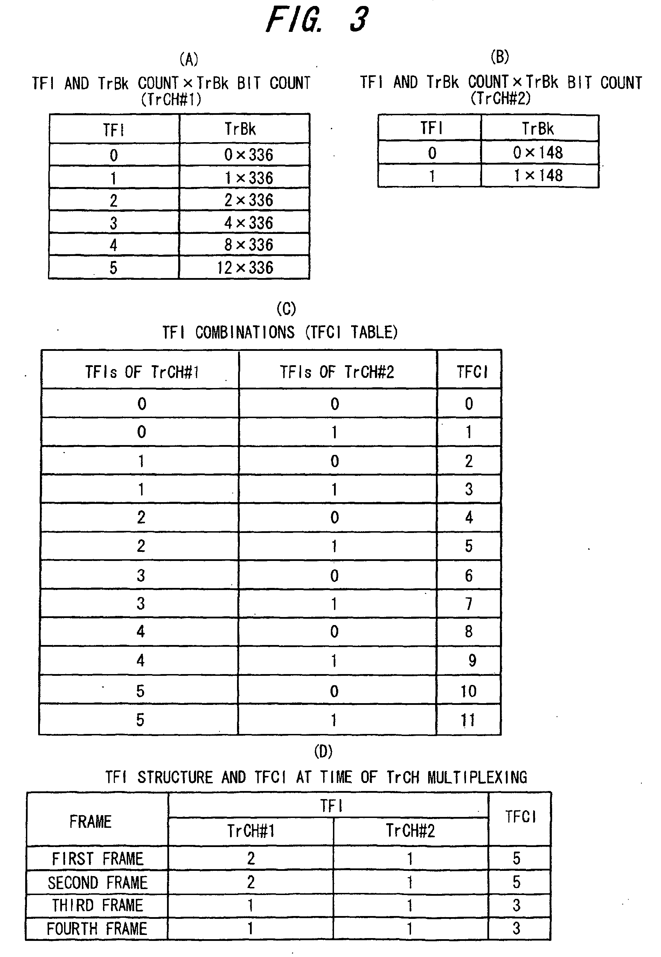

The transport format TF specifies a bit-length (= transport block count × block length) candidate per TTI of each TrCH. For example, (A) and (B) in Fig. 3 illustrate an example of a transport format TF in a case where dedicated traffic data (DTCH data) and dedicated control data (DCCH data) are multiplexed on TrCH#1 TrCH#2 and transmitted. Candidates of transport format TF of the TrCH#1 for DTCH are of six types (0 to 5) and have bit lengths per transmission time interval TTI of 0 × 336 bits, 1 × 336 bits, 2 × 336 bits, 4 × 336 bits, 8 × 336 bits and 12 × 336 bits, respectively. The TFIs Transport Format Indicators) are 0, 1, 2, 3, 4 and 5, respectively. Further, dandidates of transport format TF of the TrCH#2 for DCCH are of two types (0 and 1) and have bit lengths per TTI of 0 × 148 bits and 1 × 148 bits, respectively. The TFIs are 0 and 1, respectively. Combinations of transport formats TF of TrCh#1, TrCh#2 are 12 (= 6 × 2) in all, as illustrated at (C) of Fig. 3. A TFCI (Transport Format Combination Indicator) is appended to each combination. If the transmission time interval TTI of TrCH#1 is 20 ms, the transmission time interval TTI of TrCH#2 is 40 ms, data of which the number of bits per TTI (= 20 ms) is 2 × 336 bits and data of which the number of bits per TTI (= 20 ms) is 1 × 336 bits is transmitted successively from TrCH#1 and data of which the number of bits per TTI (= 40 ms) is 1 × 148 bits is transmitted successively from TrCH#2, then four frames of multiplexed data every 10 ms become combinations of TFIs of the kind shown at (D) in Fig. 3. The TFCIs are indicated in the column on the right side.

The TrCH demultiplexer 3a in the TAF IF 3 demultiplexes the data of each logical channel every TTI based upon the decided TFI of each TrCH and inputs the data to the channel codec 4. Further, the TAF IF 3 also inputs the TFCI to the channel codec.

The channel codec 4 executes, on a per-TrCH basis, error detection encoding processing (appending of CRC), error correction encoding processing, rate matching, primary interleaving and radio frame segmentation processing, etc. Radio frame segmentation processing is processing for segmenting the transmit data of one TTI of each TrCH frame by frame. In the example at (D) in Fig. 3, the data of 2 × 336 bits in the initial TTI = 20 ms of TrCH#1 is segmented (2 × 336)/2 bits at a time and assigned to first and second frames, and the data of 1 × 336 bits in the next TTI = 20 ms is segmented (1 × 336)/2 bits at a time and assigned to third and fourth frames. Further, the data of 1 × 148 bits in TTI = 40 ms of TrCH#2 is segmented (1 × 148)/4 bits at a time and assigned to the first to fourth frames.

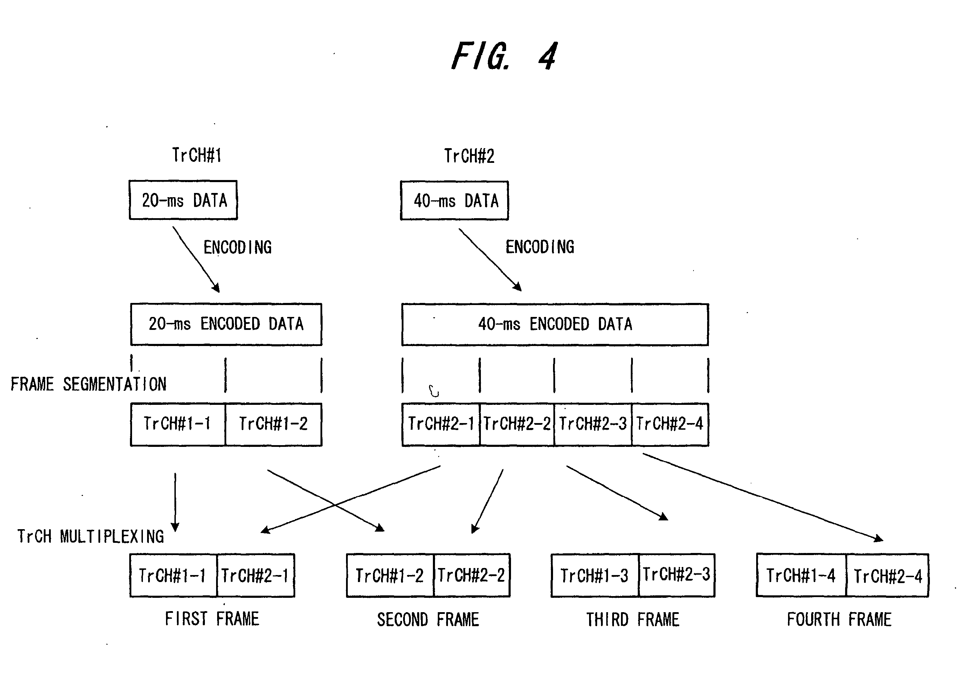

If radio frame segmentation processing is completed on each TrCH, then the multiplexer of the channel codec 4 multiplexes the transmit data of each TrCH frame by frame, executes secondary interleave processing, etc., subsequently maps the multiplexed data onto the dedicated physical data channel DPDCH of the dedicated physical channel DPCH and inputs the data to a modulator (MOD) 5 as in-phase component data at a prescribed symbol rate. Fig. 4 illustrates an example in which the two TrCH#1, TrCH#2 of TTI 20 ms and 40 ms are multiplexed and transmitted. In Fig. 4, TrCH#1-1 and TrCH#1-2 of first and second frames are the initial 20 ms of data of TrCH#1, and TrCH#1-3 and TrCH#1-4 of third and fourth frames are the next 20 ms of data of TrCH#1.

When the data of each transport channel TrCH is multiplexed, mapped to a physical channel and transmitted, the channel codec 4 appends the parameter TFCI, which indicates how the encoded data of each transport channel TrCH has been multiplexed, to the physical channel data and transmits the result in such a manner that demultiplexing can be performed correctly on the receiving side. Specifically, the channel codec 4 maps control data such as PILOT, TFCI and FBI to the dedicated physical control channel DPCCH and inputs the data to the modulator (MOD) 5 as quadrature-component data at fixed symbol rate. The TPC bits in the control data are inserted into the dedicated physical control channel DPCCH in the closed-loop controller of the MOD 5. Transmission power control will be described later.

The modulator (MOD) 5 applies spread-spectrum modulation to the transmit data of DPDCH and control data of DPCCH using the prescribed spreading codes, applies a DA conversion and subsequently executes QPSK quadrature modulation. A radio transmitter 6 frequency-converts the quadrature-modulated signal to a high frequency, applies high-frequency amplification, etc., and transmits the resultant signal from an antenna ANT_{T}.

At the time of reception, a radio receiver 7 frequency-converts a high-frequency signal received by an antenna ANT_{R} to a baseband signal. Thereafter a demodulator (DEM) 8 subjects the baseband signal to orthogonal detection, generates in-phase (I-phase) and quadrature-phase (Q-phase) signals, subjects each signal to an AD conversion, applies despread processing to the I-component and Q-component data using codes identical with the spreading codes, demodulates control data (PILOT, TFCI, FBI) and receive data and inputs the results to the channel codec 4. The latter demultiplexes the received multiplexed data per transport channel TrCH based upon the TFCI, subsequently executes deinterleaving, rate matching, error-correction decoding processing and CRC check processing, etc., on a per-TrCH basis, inputs the results to the TAF IF 3 and to each TAF unit via the TAF IF.

### (C) Operation of base station

### · Channel coding and multiplex processing

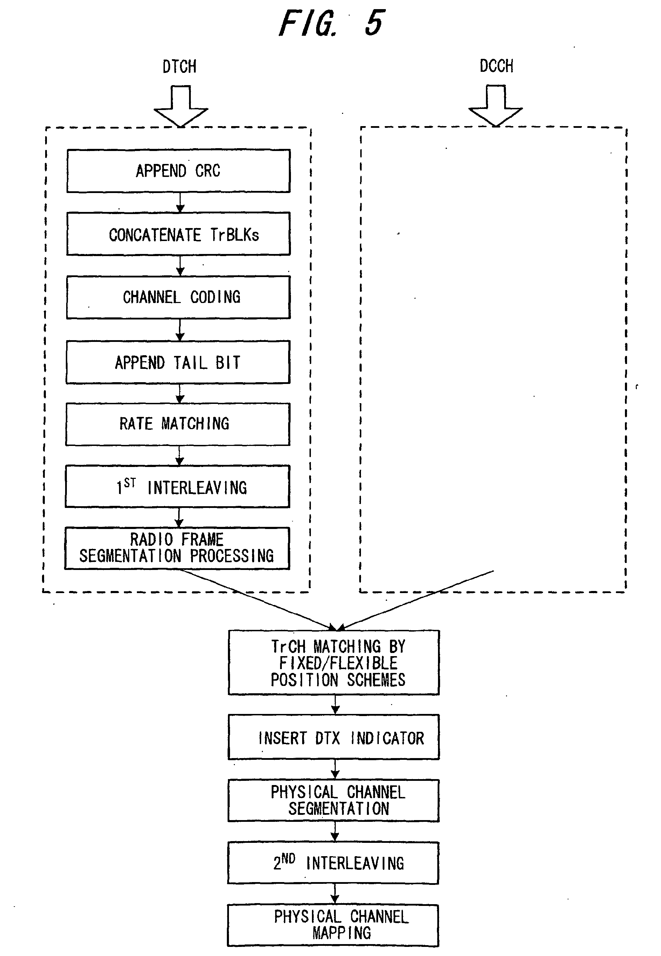

Fig. 5 is a flowchart of channel coding and multiplex processing of downlink dedicated channel (DCH) of a base station. Processing similar to the channel coding and multiplex processing of the mobile station is executed. Downlink signals of the dedicated traffic channel (DTCH) and dedicated control channel (DCCH), etc., constituting the dedicated channel DCH undergo the following processing for every transport channel (TrCH): ① appending of CRC every transport block (TrBLK) → ② concatenating of transport blocks (TrBLK) having appended CRCs → ③ channel coding (error correction encoding) → ④ appending of tail bits → ⑤ rate matching → ⑥ first interleaving → ⑦ radio frame segmentation.

The DTCH, DCCH downlink signal is transmitted upon being subjected to the following processing in the order mentioned: ① transport channel multiplexing based upon a fixed position scheme or flexible position scheme → ② DTX (interval devoid of data) indicator insertion → ③ physical channel segmentation → ④ second interleaving → ⑤ physical channel mapping.

### · Radio frame segmentation processing

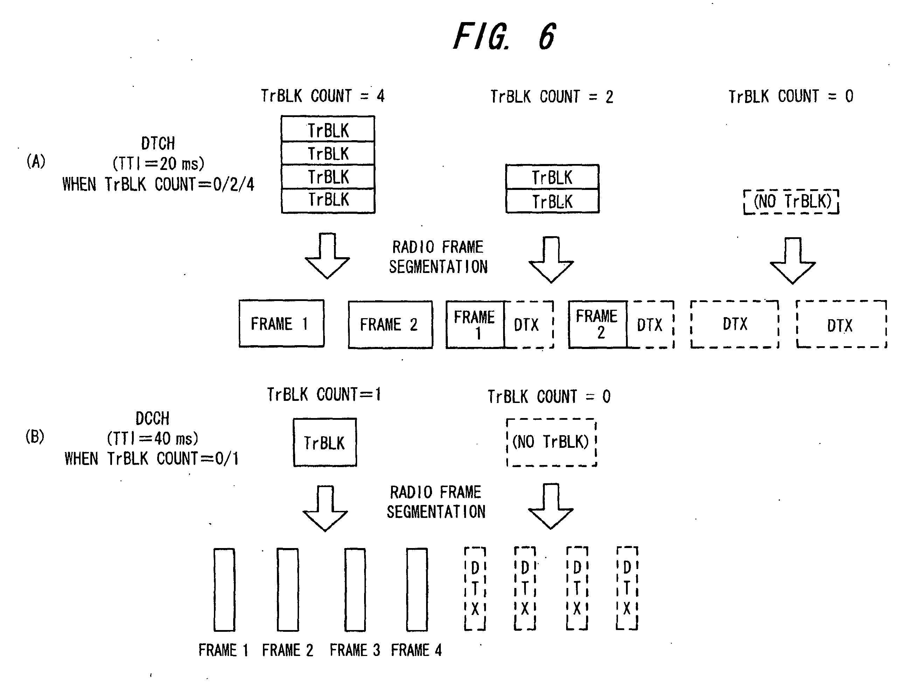

Fig. 6 illustrates an example of DTCH/DCCH radio frame segmentation. Data transmitted on the dedicated traffic channel DTCH is subjected to processing such as channel coding at fixed intervals (every TTI) and then is segmented into 10-ms frames. In the example at (A) of Fig. 6, the TTI of the dedicated traffic channel DTCH is 20 ms and therefore segmentation is into two frames. Further, the dedicated traffic channel DTCH is such that the number of TrBLKs varies in dependence upon the amount of transmit data every TTI (= 20 ms), and the number of TrBLKs capable of being transmitted in one TTI is reported from the higher layer. In the example at (A) of Fig. 6, the number of TrBLKs transmitted every TTI is any one of 0, 2, 4.

In a case where the maximum number (= 4) of TrBLKs is transmitted, two transport blocks TrBLK are assigned to each of two frames in the TTI (= 20 ms), and each frame is filled entirely with transmit data. However, if the number of transmit TrBLKs is not the maximum number (= 4), then an interval (the DTX section) devoid of data is produced in accordance with the ratio. In the example at (A) in Fig. 6, half of each frame is DTX when the number of TrBLKs is two, and the entirety of each frame is DTX when the number of TrBLKs is zero.

The dedicated control channel DCCH also is segmented into 10-ms frames in a similar manner. In the example at (B) in Fig. 6, the TTI of the dedicated control channel DCCH is 40 ms and therefore segmentation is into four frames. Further, when the number of TrBLKs is the maximum number (= 1), then the number of TrBLKs transmitted in each frame becomes 1/4 and each frame is filled entirely with transmit data. However, when the number of TrBLKs is zero, the entirety of each frame is DTX.

Each TTI length and number of TrBLKs (transport format information), etc., capable of being handled every TTI on DTCH/DCCH is reported from the higher layer when the DPCH is open.

### · DTCH/DCCH TrCH multiplexing

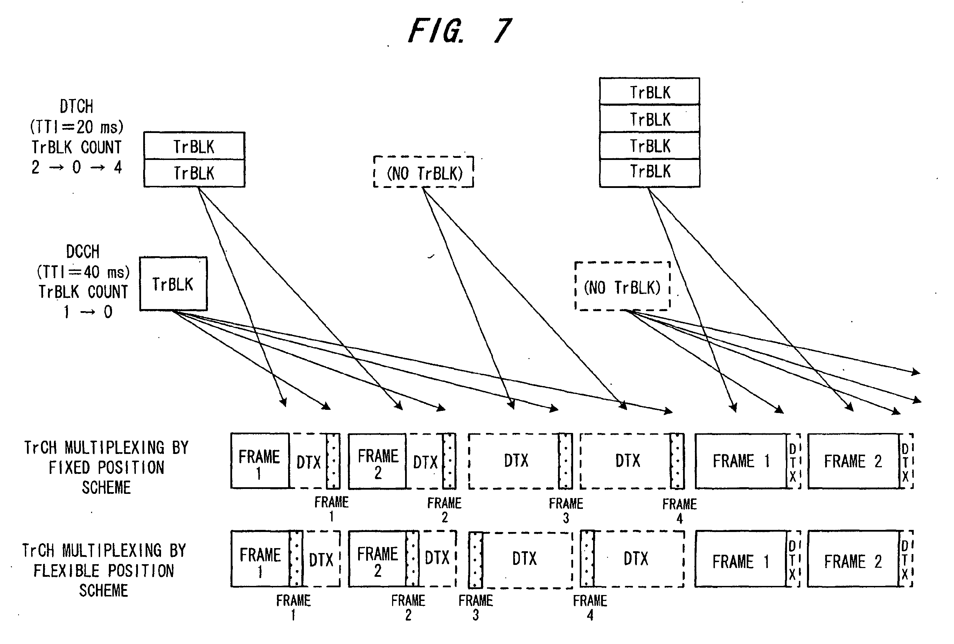

Fig. 7 is an example of DTCH/DCCH TrCH multiplexing. In TrCH multiplexing, one or a plurality of dedicated traffic channels DTCH and dedicated control channels DCCH are multiplexed, but there are two types of multiplexing methods. The first multiplexing method is the fixed position scheme, which fixes the position of the data on a per-TrCH basis and does not pack in data even in DTX sections. The second multiplexing method is the flexible position scheme, which does not fix the position of the data every TrCH and fills in only certain portions with data.

Fig. 7 illustrates how TrCH multiplexing is performed by each of these schemes in a case where the number of TrBLKs of the dedicated traffic channel DTCH changes in the manner 2 → 0 → 4 every TTI (= 20 ms) and the number of TrBLKs of the dedicated control channel DCCH changes in the manner 1 → 0 every TTI (= 40 ms). In which of the fixed and flexible position schemes multiplexing is being performed is reported from the higher layer when the dedicated physical channel DPCH is open.

### · Second interleaving and physical channel matching

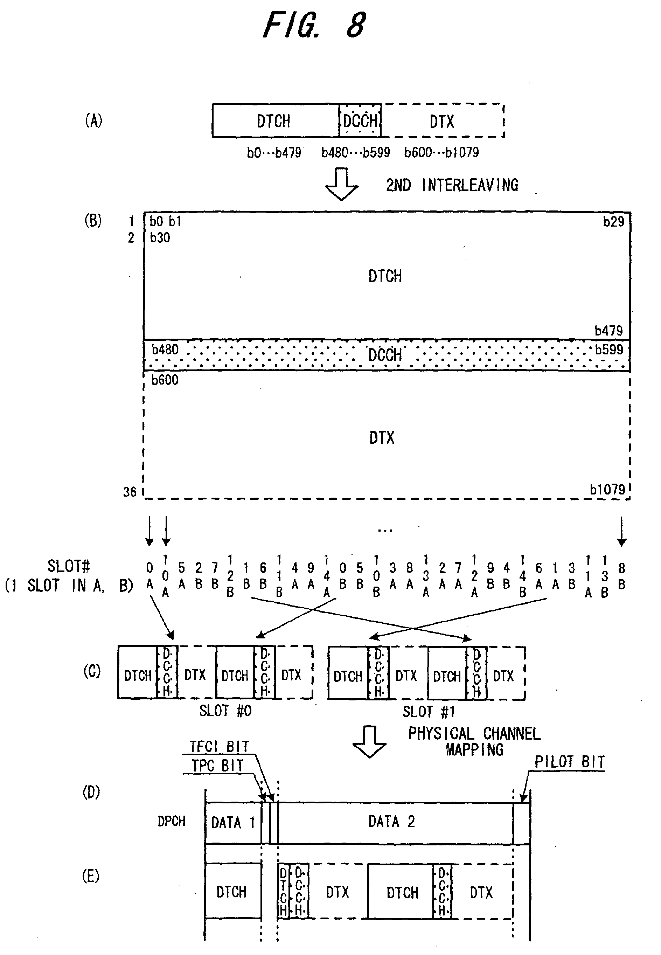

Fig. 8 is a diagram useful in describing DTCH/DCCH second interleaving and physical channel mapping. A multiplexed frame at (A) is obtained by segmenting DTCH data of TrCH#1 at 1 TTI = 20 ms, TrBLK count = 2 and DCCH data of TrCH#2 at 1 TTI = 40 ms, TrBLK count = 1 in Fig. 7 on a per-frame basis and performing multiplexing based upon the flexible position scheme. The channel codec of the base station stores 1080 bits (b0 to b1079) of this multiplexed frame successively in an interleaving memory horizontally 30 bits at a time, as indicated at (B). After storage is completed, the channel codec reads out and concatenates 36 bits of data in the vertical direction from two positions to which the same slot number (Slot #) has been assigned, thereby performing second interleaving. (C) indicates data of Slot #0, which is obtained by reading out and concatenating data from two positions (0A, 0B) of slot number 0, and data of Slot #1, which is obtained by reading out and concatenating data from two positions (1A, 1B) of slot number 1. As a result, the data that has undergone TrCH multiplexing has the order of its bits interchanged in frame units and is segmented into slot units. The data of DCCH is placed at two locations in a slot by second interleaving.

At the time of physical-channel mapping, the channel codec of the base station maps DPDCH data of Slot #0 indicated at (C) to the Data1, Data2 portions of the downlink dedicated physical channel DPCH indicated at (D) [see (E)] and thenceforth successively maps the DPDCH data of Slots #1 to #15 to the Data1, Data2 portions of the downlink dedicated physical channel DPCH and transmits the result.

### · Positional relationship between DPCH and SCH

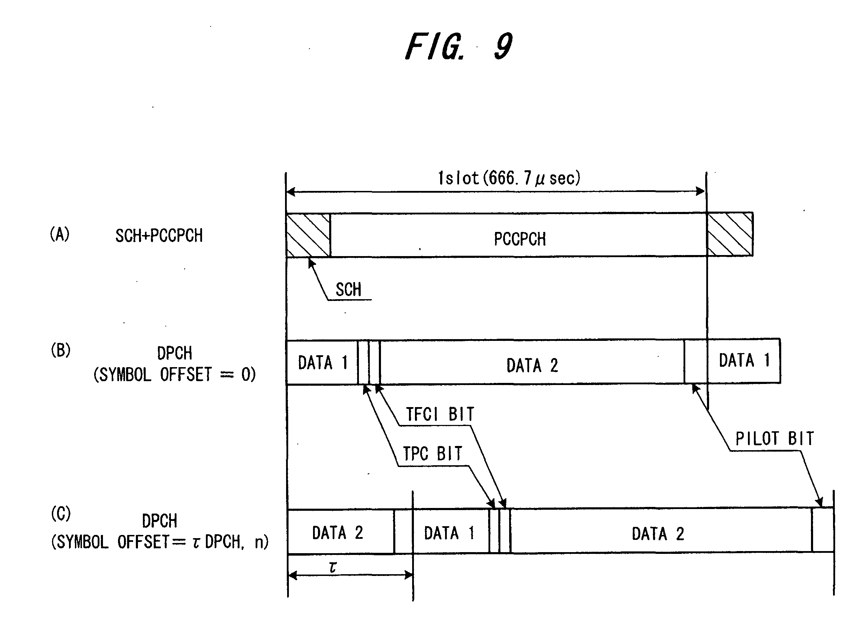

Fig. 9 illustrates the positional relationship between the dedicated physical channel DPCH and synchronization channel SCH. The synchronization channel SCH is situated at the beginning 66.7 µs of every slot, as indicated at (A). As indicated at (B), the dedicated physical channel DPCH comprises data bits to which the DTCH or DCCH is mapped, a TPC bit for uplink transmission power control, a TFCI bit indicating the number of TrBLKs of DTCH/DCCH, and a Pilot bit for achieving synchronization. The data bits are further divided into two portions, namely Data1 and Data2.

The slot format (number of bits of each item of data) of the dedicated physical channel DPCH differs depending the content of communication and is reported from the higher layer when the DPCH is opened. Further, there are cases where an offset (symbol offset) is present in a slot of the dedicated physical channel DPCH and in a slot of the synchronization channel SCH, as indicated at (C). The offset quantity τ also is reported from the higher layer when the DPCH is open.

### · Position of DTCH/DCCH conforming to number of TrBLKs

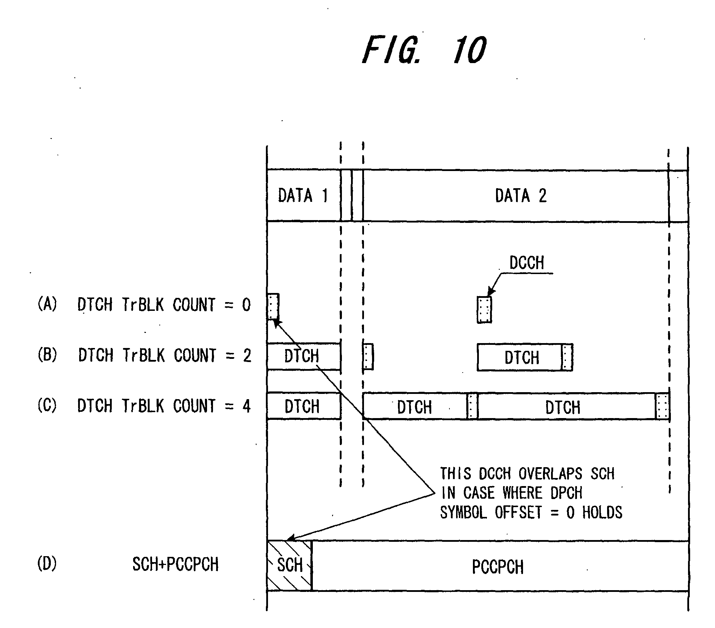

Fig. 10 is a diagram useful in describing a DTCH/DCCH positional relationship that conforms to the number of TrBLKs of the dedicated traffic channel DTCH and the positional relationship of the synchronization channel SCH. In a case where TrCH multiplexing is by the flexible position scheme, the position of the DCCH in the slot varies depending upon the number of TrBLKs of the DTCH, as shown in Fig. 7, and is separated into two location by interleaving. Accordingly, ① in a case where TrBLK count = 0 holds in the DTCH, the position of the DCCH in the slot is present at the position indicated at (A) in Fig. 10; ② in a case where TrBLK count = 2 holds in the DTCH, the position of the DCCH in the slot is present at the position indicated at (B) in Fig. 10; and ③ in a case where TrBLK count = 4 holds in the DTCH, the position of the DCCH in the slot is present at the position indicated at (C) in Fig. 10. Since the synchronization channel SCH is present at the position indicated at (D), TrCH multiplexing is carried out according to the flexible position scheme. If the symbol offset of the dedicated physical channel DPCH is zero, the DCCH at (A) and the synchronization channel SCH overlap and the dedicated control channel DCCH sustains interference from the synchronization channel SCH. Further, there are also cases where the synchronization channel SCH overlaps the DCCH indicated at (B), (C) in dependence upon the DPCH offset quantity τ.

### · Relationship between TFCI and number of TrBLKs of DTCH/DCCH

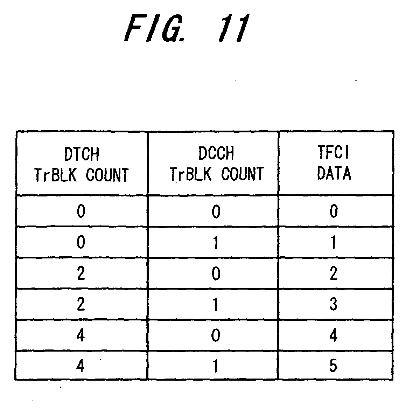

Fig. 11 is a table indicating the relationship between TFCI and number of TrBLKs of DTCH/DCCH in a case where the numbers of DTCH blocks of TrCH#1 at TTI = 20 ms are 0, 2, 4 and the numbers of DCCH blocks of TrCH#2 at TTI = 40 ms are 0, 1. The table is created as set forth below. Specifically, there are six possible combinations of TFIs of DTCH/DCCH (combinations of numbers of TrBLKs of DTCH/DCCH). The CTFC (Calculated Transport Format Combination) is calculated using a prescribed calculation formula with regard to each combination and the TFCI (= 0 to 5) conforming to this CTFC is obtained from the CTFC·TFCI correspondence table, thereby creating the above-described table.

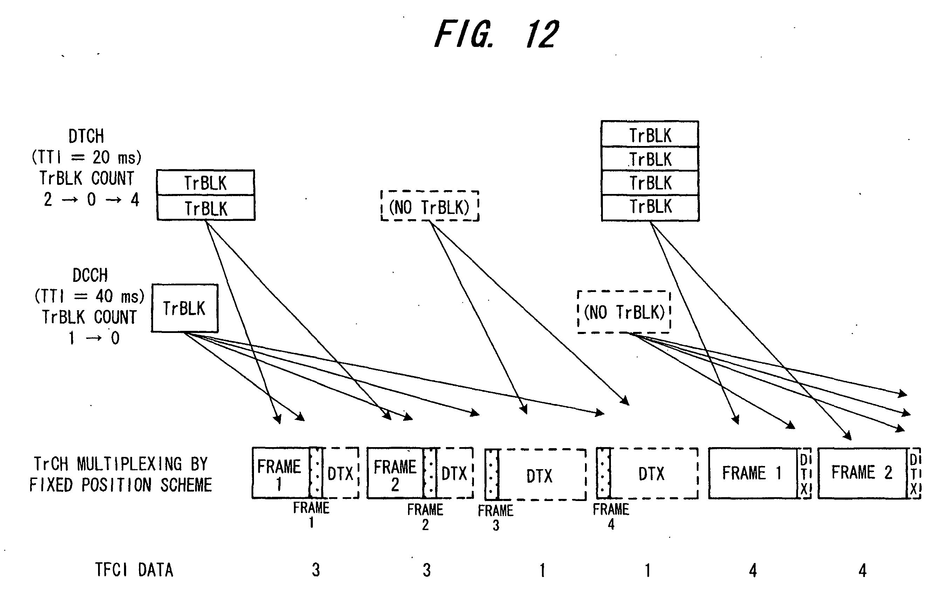

Fig. 12 is a diagram useful in describing an example of a change in TFCI. This illustrates a change in TFCI in an instance where multiplexing has been performed in accordance with the flexible position scheme in a case where the number of TrBLKs of the dedicated traffic channel DTCH varies in the manner 2 → 0 → 4 every TTI (= 20 ms) and the number of TrBLKs of the dedicated control channel DCCH varies in the manner 1 → 0 every TTI (= 40 ms). The TFCI data varies every minimum TTI (20 ms in this case) in the multiplexed TrCH. Since this TFCI has been mapped to a prescribed position of the DPCH, the mobile station MS demodulates the TFCI from the receive information and can obtain the number of blocks of each TrCH, i.e., the number of TrBLKs of DTCH/DCCH, from this TFCI and the correspondence table (TFCI table) of Fig. 11.

### (D) Factors behind overlapping of synchronization channel SCH and dedicated control channel DCCH

The following four factors are considered to be behind the overlapping of the synchronization channel SCH and dedicated control channel DCCH:

The first factor is a symbol offset of the dedicated physical channel DPCH with respect to the synchronization channel SCH, as evident from Fig. 10. The amount of the offset is reported from the higher layer when the DPCH is open.

The second factor is the slot format of the downlink DPCH. There are 17 types of slot formats of the downlink DPCH, as illustrated in Fig. 22, and the bit lengths of Data1, Data1 and bit lengths of TPI/PFCI/Pilot differ in each format. Consequently, even if the DCCH data position after interleaving at (C) of Fig. 8 is the same, the position in the slot of the DCCH data mapped to Data1 Data2 changes when the slot format is changed. Owing to this change in position, a situation in which the dedicated control channel DCCH overlaps the synchronization channel SCH arises. Which slot format will be used depends upon the amount of transmit data, and the slot format used is reported from the higher layer when the DPCH is open.

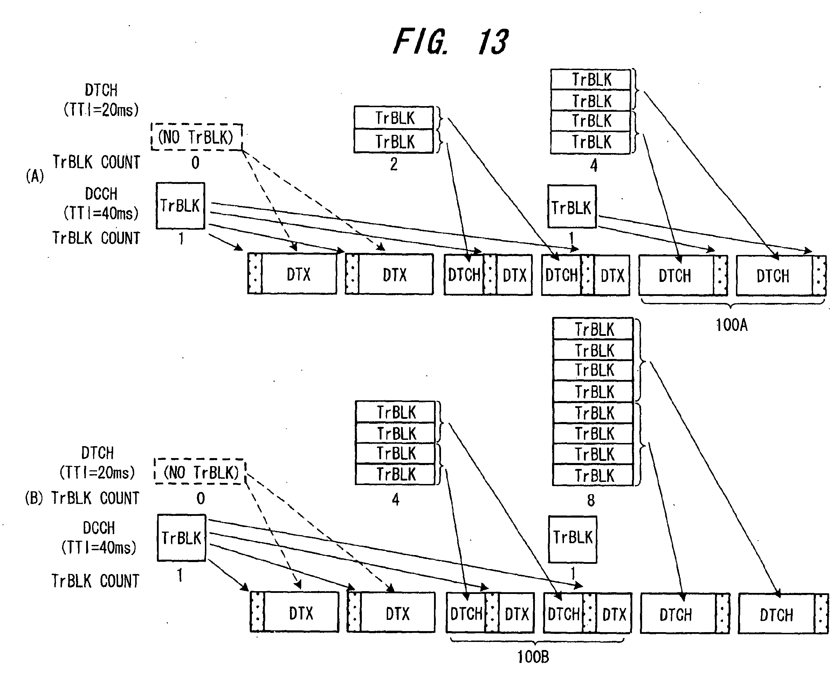

The third factor is the transport format of each TrCH. If it is assumed that numbers of DTCH blocks of TrCH#1 at TTI = 20 ms are 0, 2, 4 and the numbers of DCCH blocks of TrCH#2 at TTI = 40 ms are 0, 1, that the number of DTCH blocks of TrCH#1 varies in the manner 0 → 2 → 4 every 20 ms and that the number of DCCH blocks of TrCH#2 varies in the manner 1 → 1 every 40 ms, then TrCH multiplexing will be performed by the flexible position scheme in the manner illustrated at (A) in Fig. 13.

On the other hand, if it is assumed that numbers of DTCH blocks of TrCH#1 at TTI = 20 ms are 0, 2, 4, 8 and the numbers of DCCH blocks of TrCH#2 at TTI = 40 ms are 0, 1, that the number of TrBLKs of TrCH#1 varies in the manner 0 → 4 → 8 every 20 ms and that the number of TrBLKs of TrCH#2 varies in the manner 1 → 1 every 40 ms, then TrCH multiplexing will be performed by the flexible position scheme in the manner illustrated at (B) in Fig. 13.

If TrCH multiplexed data 100A, 100B at (A) and (B) of Fig. 13 are compared with regard to a case where the number of TrBLKs of DTCH is four and the number of TrBLKs of DCCH is one at (A) and (B) of Fig. 13, then it will be understood that the DCCH positions are different. This is ascribable to a difference in transport format TF. The transport format TF is reported from the higher layer when the DPCH is open.

The fourth factor is the number of DTCH blocks per frame, as will be evident from Fig. 10. The number of DTCH blocks per frame is found from the TFCI included in the receive data, the TFCI table (see Fig. 11) and the TTI reported from the higher layer when the DPCH is open.

### (E) Structure of power controller

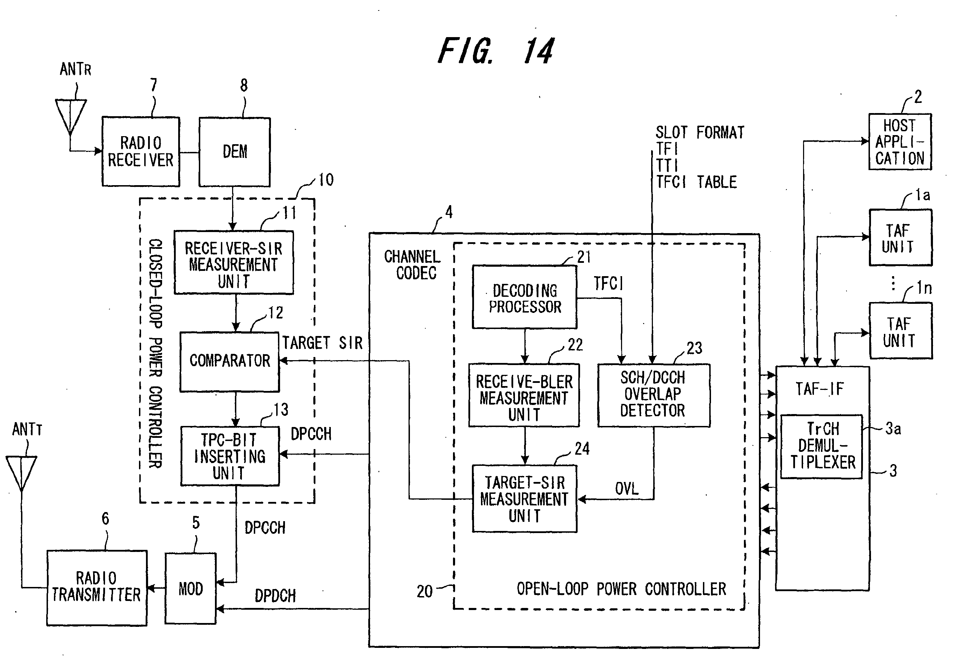

Fig. 14 is a block diagram of a mobile station MS having a closed-loop power controller and an open-loop power controller according to the present invention. Components identical with those of Fig. 2 are designated by like reference characters.

In a closed-loop controller 10, a receiver-SIR measurement unit 11 measures the signal-to-interference power ratio SIR, and a comparator 12 compares the target SIR and the receive SIR and inputs the result of comparison to a TPC-bit inserting unit 13. The TPC-bit inserting unit 13 inserts TPC bit = 0 into the dedicated physical control channel DPCCH, which enters from the channel codec 4, if the receive SIR is greater than the target SIR and inserts TPC bit = 1 into the dedicated physical control channel DPCCH if the receive SIR is smaller than the target SIR. The target SIR, which is a SIR value necessary in order to obtain an error rate of, e.g., 10⁻³ (occurrence of error at a rate of once per 1000 times), is set in the comparator 12 from the channel codec 4.

The modulator 5 applies spread-spectrum modulation to the dedicated physical data channel DPDCH (DTCH, DCCH) output from the channel codec 4 and to the dedicated physical control channel DPCCH into which the TPC bits have been inserted, and applies a DA conversion and quadrature modulation after spread-spectrum modulation. Processing such as a frequency conversion and power amplification is applied by the radio unit 6, and the resultant signal is transmitted from the antenna ANT_{T} to the base station.

In an open-loop controller 20, a decoding processor 21 applies error correction decoding processing and error detection processing to the receive signal that is output from the demodulator (DEM) 8, outputs the result of error detection to a receive-BLER measurement unit 22 and inputs the decoded TFCI is input to an SCH/DCCH overlap detector 23.

On the basis of the result of error detection that enters from the decoding processor 21, the receive-BLER measurement unit 22 measures the block error rate BLER (receive BLER) of the dedicated physical channel DPCH during reception and inputs the receive BLER to a target-SIR measurement unit 24. Meanwhile, using slot format, the transport format TF of each TrCH, the transmission time interval TTI of each TrCH and the TrCH multiplexing scheme that are reported from the higher layer when the DPCH is open and the TFCI that enters from the decoding processor 21, the SCH/DCCH overlap detector 23 monitors whether the synchronization channel SCH and dedicated control channel DCCH overlap and outputs a signal OVL indicating the result of monitoring. More specifically, the SCH/DCCH overlap detector 23 obtains the CTFC, which corresponds to the TFCI that enters from the decoding processor 21, from a conversion table, calculates the TFI of each TrCH from the CTFC and then obtains the number of blocks and block-bit length per TTI on a per-TrCH basis from the transport format. Thereafter, the SCH/DCCH overlap detector 23 refers to the slot format to obtain the DCCH position in the slot and then checks to determine whether the dedicated control channel DCCH overlaps the synchronization channel SCH in terms of timing, taking into consideration the symbol offset.

If the synchronization channel SCH and the dedicated control channel DCCH are not overlapping, the target-SIR measurement unit 24 compares the receive BLER and the target BLER. The target-SIR measurement unit 24 lowers the level of the target SIR by one rank if the receive BLER is superior to the target BLER, raises the level of the target SIR if the receive BLER is inferior to the target BLER and inputs the changed target SIR to the closed-loop controller 10. The target-SIR measurement unit 24 performs the above-described open-loop control frame by frame.

On the other hand, if the synchronization channel SCH and the dedicated control channel DCCH are overlapping, the target-SIR measurement unit 24 suspends the above-described open-loop control processing, increases the target SIR by a set level in such a manner that the dedicated control channel DCCH can be received satisfactorily even if interference is received from the synchronization channel SCH, or changes the target SIR to obtain a set level, and inputs the new target SIR to the closed-loop controller 10. As a result, in closed-loop power control processing, the receive SIR becomes inferior to the target SIR and therefore the mobile station MS informs the base station BTS to raise the transmission power. The base station raises the transmission power, the reception quality of the dedicated control channel DCCH is improved and communication is no longer severed.

The target-SIR measurement unit 24 fixes the target SIR at the set level irrespective of the receive BLER for the duration of the minimum TTI in all TrCHs during communication. Upon elapse of the minimum TTI, the target-SIR measurement unit 24 checks the signal OVL, maintains the target SIR at the set level if the SCH and DCCH are overlapping and resumes open-loop power control if the SCH and DCCH are not overlapping.

Thus, since the target SIR is raised only if the dedicated control channel DCCH and synchronization channel SCH overlap, a decline in reception quality of the dedicated control channel DCCH, which is ascribable to interference with the synchronization channel SCH, can be suppressed while an improvement in reception quality that is more than necessary is suppressed.

### (F) Open-loop control processing

### (a) First open-loop control

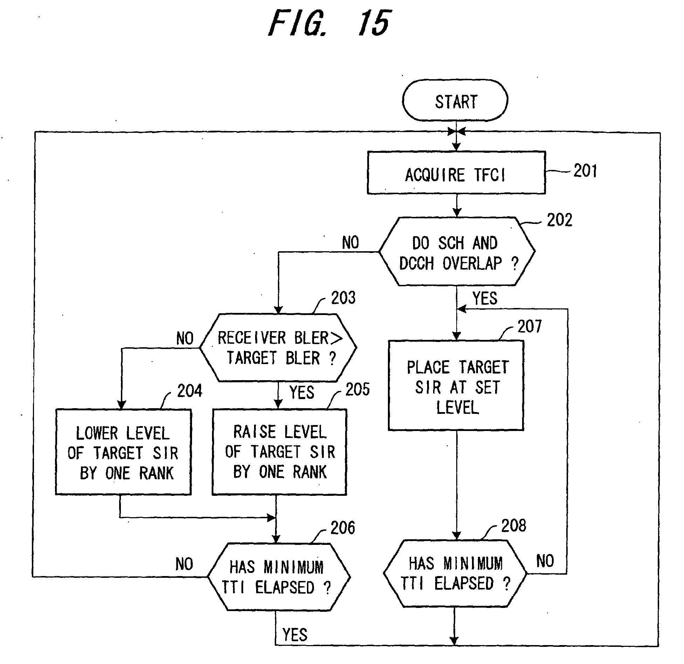

Fig. 15 is a flowchart of first open-loop control processing according to the present invention.

The SCH/DCCH overlap detector 23 acquires the TFCI from the decoding processor 21 every minimum TTI (step 201) and checks to determine whether the synchronization channel SCH and dedicated control channel DCCH overlap in terms of timing (step 202) using this TFCI and the slot format, transport format TF of each TrCH, transmission time interval TTI of each TrCH and TrCH multiplexing scheme, which are reported from the higher layer when the DPCH is open. If the synchronization channel SCH and the dedicated control channel DCCH are not overlapping, the target-SIR measurement unit 24 compares the receive BLER and the target BLER frame by frame (step S203). The target-SIR measurement unit 24 lowers the level of the target SIR (step 204) by one rank if the receive BLER is superior to the target BLER, raises the level of the target SIR (step 205) if the receive BLER is inferior to the target BLER and inputs the changed target SIR to the closed-loop controller 10. Thereafter, the target-SIR measurement unit 24 checks to see whether the minimum TTI has elapsed (step 206), repeats the processing from step 203 onward until the minimum TTI elapses and returns to step 201 when the minimum TTI elapses.

If it is found at step 202 that the synchronization channel SCH and dedicated control channel DCCH overlap, then the target-SIR measurement unit 24 increases and fixes the target SIR at the set level irrespective of the receive BLER (step 207) and thenceforth checks to see whether the minimum TTI has elapsed (step 208). The target-SIR measurement unit 24 fixes the target SIR at the set level until the minimum TTI elapses and returns to step 201 when the minimum TTI elapses.

### (b) Second open-loop control

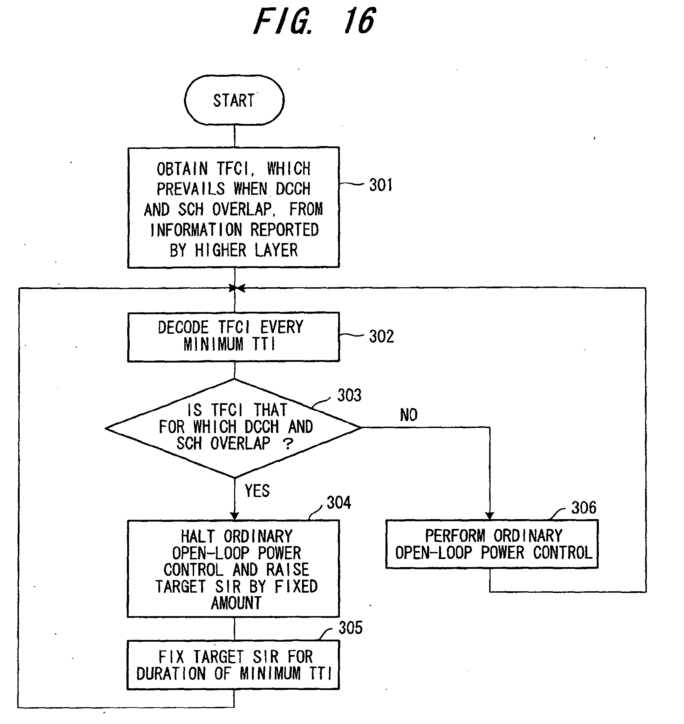

Fig. 16 is a flowchart of second open-loop control processing according to the present invention.

Using the information (slot format, amount of symbol offset, respective TTI lengths of DTCH/DCCH, respective transport formats TF of DTCH/DCCH and TrCH multiplexing scheme) reported from the higher layer when the DPCH is open, the SCH/DCCH overlap detector 23 obtains in advance and stores the TFCI that prevails in a case where the timings of the dedicated control channel DCCH and synchronization channel SCH overlap (step 301).

The SCH/DCCH overlap detector 23 thenceforth acquires TFCI data from the decoding processor 21 every minimum TTI (step 302) and determines whether the acquired TFCI is the TFCI, which was found beforehand at step 301, prevailing in the case where the timings of the DCCH and SCH overlap (step 303). If the TFCI is the TFCI prevailing at overlap, the ordinary open-loop control processing is suspended, the target SIR is increased by an amount that enables the dedicated control channel DCCH to be received satisfactorily even if interference is received from the synchronization channel SCH, or the target SIR is increased to a set level, and the closed-loop controller 10 is instructed of the new target SIR (step 304). Thereafter, the target SIR is set (step 305), irrespective of the receive BLER, for the duration of the minimum TTI, after which the processing from step 302 onward is repeated.

If the result of the determination at step 303 is that the TFCI is one prevailing when the dedicated control channel DCCH and synchronization channel SCH do not overlap, on the other hand, then ordinary open-loop power control processing is executed frame by frame (step 306), after which the processing from step 302 onward is repeated.

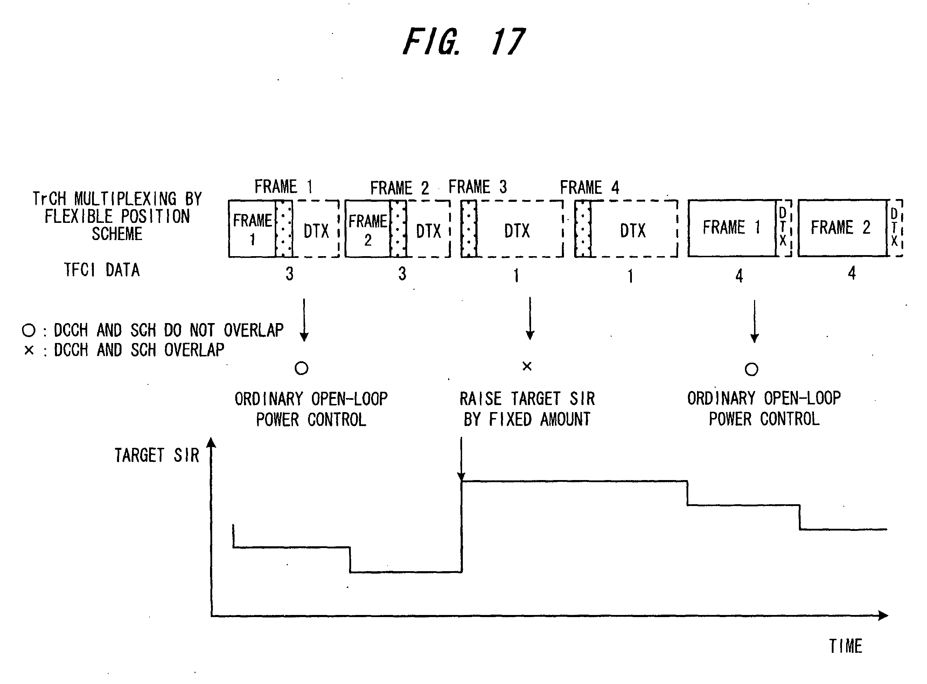

Fig. 17 is a diagram useful in describing second open-loop control processing. Fig. 17 illustrates the manner in which target SIR varies in accordance with Fig. 12 in a case where TrCH#1 and TrCH#2 overlap. Here it is assumed that the amount of symbol offset is zero. In the example of this Figure, DCCH and SCH overlap when TFCI = 1 holds, and therefore the target SIR is increased to a set level for the duration.

In accordance with this second open-loop control, the TFCI that prevails when the DCCH and SCH overlap in terms of timing is found when the DPCH is open. As a result, whether the SCH and DCCH overlap or not can be determined by simple processing that entails merely comparing the TFCI acquired every minimum TTI and the TFCI that prevails in case of overlap.

### (c) Third closed-loop control

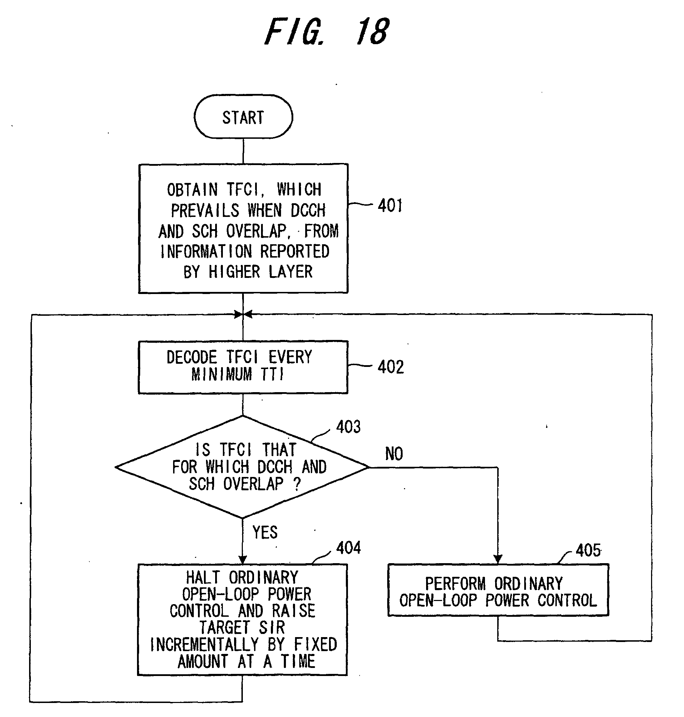

Fig. 18 is a flowchart of third open-loop control processing according to the present invention.

Using the information (slot format, amount of symbol offset, respective TTI lengths of DTCH/DCCH, respective transport formats TF of DTCH/DCCH and TrCH multiplexing scheme) reported from the higher layer when the DPCH is open, the SCH/DCCH overlap detector 23 obtains in advance and stores the TFCI that prevails in a case where the timings of the dedicated control channel DCCH and synchronization channel SCH overlap (step 401).

The SCH/DCCH overlap detector 23 thenceforth acquires TFCI data from the decoding processor 21 every minimum TTI (step 402) and determines whether the acquired TFCI is the TFCI, which was found beforehand at step 401, prevailing in the case where the timings of the DCCH and SCH overlap (step 403). If the TFCI is the TFCI prevailing at overlap, the ordinary open-loop control processing is suspended, the target SIR is increased by a fixed amount ΔP irrespective of the target BLER and this is indicated to the closed-loop controller 10 (step 404). Control thenceforth returns to step 402. If the TFCI is the TFCI in case of overlap even in the next minimum TTI, then the target SIR is increased further by the fixed amount ΔP, this is indicated to the closed-loop controller 10 and control thenceforth returns to step 402. As a result, the target SIR is increased in stepwise fashion. It should be noted that ΔP is greater than an increase/decrease width ΔP' at the time of ordinary open-loop power control.

If the result of the determination at step 403 is that the TFCI is one prevailing when there is no overlap, on the other hand, then ordinary open-loop power control processing is executed frame by frame (step 405), after which the processing from step 402 onward is repeated.

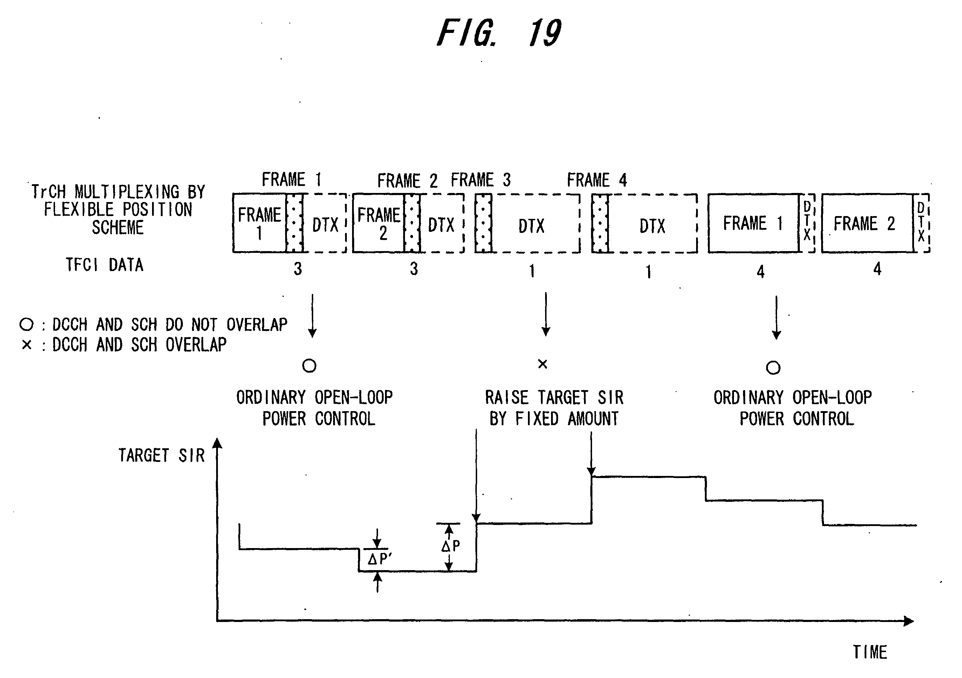

Fig. 19 is a diagram useful in describing third open-loop control processing. Fig. 19 illustrates the manner in which target SIR varies in accordance with Fig. 12 in a case where TrCH#1 and TrCH#2 overlap. Here it is assumed that the amount of symbol offset is zero. In the example of Fig. 19, DCCH and SCH overlap when TFCI = 1 holds, and therefore the target SIR is increased by the fixed amount ΔP incrementally in stepwise fashion.

In accordance with this third open-loop control, the target SIR is increased stepwise rather than being increased at all once as in second open-loop control. As a result, a decline in reception quality of the DCCH can be suppressed while an improvement in reception quality that is more than necessary is suppressed.

Though the invention has been described with regard to a case where SIR is used as the target quality in the above description, the present invention is not limited to SIR.

Thus, by working the present invention as described above, it is possible to obtain a satisfactory DCCH reception quality even in a case where the positions of the DCCH and SCH overlap. Thus the invention has major practical effects.

## Claims

1. A power control method for controlling target quality, which is necessary to generate data for controlling downlink transmission power, based upon error rate of a receive signal, **characterized by** comprising:
monitoring whether timing of a downlink dedicated control channel and timing of a downlink synchronization channel for a cell search overlap;
in case of overlap, increasing said target quality to a set value or increasing said target quality a set amount at a time; and
in case of no overlap, increasing or decreasing the target quality based upon the error rate of the receive signal.

2. A power control method according to claim 1, **characterized by** measuring the quality of the receive signal, comparing said measured receive quality and said target quality and creating data for downlink transmission power control based upon magnitudes of the compared qualities.

3. A power control method according to claim 1, **characterized in that** said quality is SIR, which is a ratio of signal power to interference power.

4. A power control method according to claim 1, **characterized by** obtaining and storing a TFCI, which prevails in a case where timing of a dedicated control channel DCCH and timing of a synchronization channel SCH overlap, using information reported from a higher layer when a dedicated physical channel DPCH is open; and
determining whether the timing of the dedicated control channel and the timing of the synchronization channel overlap based upon whether a TFCI received at the time of communication agrees with said stored TFCI.

5. A power control method according to claim 4, **characterized in that** the information reported from said higher layer is ① slot format of the dedicated physical channel DPCH, ② amount of offset of the dedicated physical channel DPCH with respect to the synchronization channel, ③ transmission time intervals TTI of respective ones of the dedicated traffic channel DTCH and dedicated control channel DCCH; and ④ transport formats TF of respective ones of the dedicated traffic channel DTCH and dedicated control channel DCCH.

6. A power control apparatus for controlling target quality, which is necessary to generate data for controlling downlink transmission power, based upon error rate of a receive signal, **characterized by** comprising:
an error-rate measurement unit for measuring the error rate of the receive signal;
an overlap monitoring unit for monitoring whether timing of a downlink dedicated control channel and timing of a downlink synchronization channel for a cell search overlap; and
a target-quality controller for increasing or decreasing target quality based upon the error rate of the receive signal in case of no overlap of said two timings, and in case of overlap of said two timings, increasing said target quality to a set value or increasing said target quality a set amount at a time.

7. A power control apparatus according to claim 6, **characterized by** comprising:
a quality measurement unit for measuring the quality of the receive signal;
a comparator for comparing said measured receive quality and said target quality in terms of magnitudes thereof; and
a data creating unit for downlink transmission power control for creating data for downlink transmission power control based upon result of the comparison of magnitudes.

8. A power control apparatus according to claim 6, **characterized by** comprising a TFCI detector for detecting a TFCI contained in a receive signal;
said overlap monitoring unit obtains and stores a TFCI, which prevails in a case where timing of a dedicated control channel DCCH and timing of a synchronization channel SCH overlap, using information reported from a higher layer when a dedicated physical channel DPCH is open, and determines whether the timing of the dedicated control channel and the timing of the synchronization channel overlap based upon whether a TFCI received at the time of communication agrees with said stored TFCI.

9. A power control apparatus according to claim 8, **characterized in that** the information reported from said higher layer is ① slot format of the dedicated physical channel DPCH, ② amount of offset of the dedicated physical channel DPCH with respect to the synchronization channel, ③ transmission time intervals TTI of respective ones of the dedicated traffic channel DTCH and dedicated control channel DCCH, and ④ transport formats TF of respective ones of the dedicated traffic channel DTCH and dedicated control channel DCCH and said overlap monitoring unit obtains the TFCI, which prevails in a case where timing of the dedicated control channel DCCH and timing of the synchronization channel SCH overlap, using these items of information.

10. A power control apparatus having an open-loop power controller for controlling target SIR, and a closed-loop power controller for creating data for downlink transmission power control based upon SIR of a receive signal and said target SIR, **characterized in that**:
the open-loop controller investigates whether a dedicated control channel DCCH and a synchronization channel SCH overlap and, if the two overlap, suspends ordinary open-loop power control processing, increases the target SIR by a satisfactory level and indicates this to the closed-loop controller;
the closed-loop controller maintains the indicated target SIR and executes closed-loop transmission power control processing based upon said target SIR and receive SIR; and
the open-loop controller resumes ordinary open-loop transmission power control processing after DCCH reception ends.

11. A power control method in which if reception quality at a terminal with regard to a signal that has been transmitted from a base station to said terminal at a specific address falls below a target quality, a control signal is transmitted from said terminal to said base station so as to exercise control in a direction that increases transmission power of a signal at said terminal address; if said reception quality exceeds the target quality, a control signal is transmitted from said terminal to said base station so as to exercise control in a direction that decreases said transmission power; and control for increasing said target quality more when error of said receive signal is large than when it is small is carried out, **characterized in that** said power control method comprising:
detecting that transmit timing of a specific signal in signals transmitted from the base station to said specific terminal address overlaps transmit timing of a signal, which has a portion that interferes with said specific signal more than other portions, in signals transmitted from said base station to a plurality of terminals in common.

12. In a terminal where, if reception quality at the terminal with regard to a signal that has been transmitted to the address of this terminal from a base station falls below a target quality, a control signal is transmitted to said base station so as to exercise control in a direction that increases transmission power of a signal at said terminal address; if said reception quality exceeds the target quality, a control signal is transmitted to said base station so as to exercise control in a direction that decreases said transmission power; and control for increasing said target quality more when error of said receive signal is large than when it is small is carried out **characterized in that** said terminal comprises:
means for detecting that transmit timing of a specific signal in signals transmitted from the base station to said specific terminal address overlaps transmit timing of a signal, which has a portion that interferes with said specific signal more than other portions, in signals transmitted from said base station to a plurality of terminals in common; and
a controller for performing control to increase said target quality in accordance with result of the detection.
